# EUROPÄISCHE PATENTSCHRIFT

(11) **EP 2 226 792 B1**
(45) Veröffentlichungstag und Bekanntmachung des Hinweises auf die Patenterteilung: **25.10.2017**
(21) Anmeldenummer: 10000755.8
(22) Anmeldetag: 26.01.2010
(51) Int. Cl.: G10L 15/26

(54) **System zur sprachgesteuerten Steuerung von Messgeräten**
System for voice-controlled control of measuring devices
Système de commande d'appareils de mesure à commande vocale

(30) Priorität: 03.03.2009 DE 102009011395
(43) Veröffentlichungstag der Anmeldung: 08.09.2010
(73) Patentinhaber: Rohde & Schwarz GmbH & Co. KG, 81671 München (DE)
(72) Erfinder: Dressel, Wolfgang, Dr., 82194 Gröbenzell (DE)
(74) Vertreter: Körfer, Thomas

(56) Entgegenhaltungen:
- EP-A1- 1 265 227
- US-A- 4 864 226
- US-A- 5 649 129
- US-A1- 2002 103 651

## Beschreibung

Die Erfindung betrifft ein System zur sprachgesteuerten Steuerung eines Messgeräts bzw. -systems.

Die Bedienung eines Messgeräts bzw. -systems in der Entwicklung, in der Fertigung, in der Inbetriebsetzung und im Service gestaltet sich für einen Benutzer oftmals schwierig, da der Benutzer mit beiden Händen Einstellungen oder Abstimmungen am mit dem Messgerät bzw. -system verbundenen Messobjekt durchführen muss und gleichzeitig keine weitere freie Hand zur Steuerung des Messgeräts bzw. -systems zur Verfügung steht.

Aus der EP 1 346 685 A1 ist eine sprachgestützte Eingabe von zu gemessenen Signalverläufen jeweils gehörigen Kommentaren in einem Messgerät bekannt aus der Medizintechnik. Der für die Kommentierung der gemessenen Signalverläufe anwendbare Sprachumfang beschränkt sich auf den in einer Wissensbasis der Spracherkennung abgelegten Umfang von Begriffen, die von der Spracherkennung interpretierbar sind.

Die Übertragung der für die Kommentierung von gemessenen Signalverläufen verwendeten Spracheingabe auf eine sprachgestützte Steuerung von Messgeräten, um das Defizit einer fehlenden manuellen Betätigung des Messgeräts zu beseitigen, gestaltet sich insbesondere dann als schwierig, wenn bei Verwendung mehrerer Messgeräte in einem Messsystem die Datenbasis zur Speicherung einer Wissensbasis mit allen zu jedem Messgerät jeweils gehörigen Steuerbefehlen nicht ausreichend ist und bei einem Wechsel oder einer Neueinführung eines Messgeräts ins Messsystem der Sprachumfang der Wissensbasis aufwendig durch Programmierung und Austausch einer die Wissensbasis speichernden Datenbasis wieder angepasst werden muss.

Die US 2002/103651 A1 offenbart ein digitales Oszilloskop mit einem internen Bus. Der Controller ist ein Command-Processor (=Befehls-Prozessor). Dieser Command-Processor ist erstens mehrfach ausgeführt. Zweitens übersetzt dieser Command-Processor sogenannte Tokens in Systembefehle zur Durchführung bestimmter Aktionen im Untersystem des digitalen Oszilloskops und ist somit kein Bus-Controller. Die Command Map stellt zwar eine Datenbasis dar, die alle vom Command Processor benötigten Tokens speichert. Die Anzahl der Token zur Ansteuerung bestimmter Funktionen im Untersystem des digitalen Oszilloskops orientiert sich einzig am Funktionsumfang eines einzigen Untersystems, nämlich am Funktionsumfang des Untersystems des digitalen Oszilloskops, und nicht an mehreren, sich ständig ändernden Untersystemen und ist aufgrund des fixierten Funktionsumfangs des Untersystems eine fixe Größe und ist keine veränderliche und ständig aktualisierte Größe, die sich am Funktionsumfang von zum jeweiligen Zeitpunkt aktuell am Bus befindlichen Untersystemen, Geräten oder Baugruppen orientiert.

Aufgabe der Erfindung ist es deshalb, ein System zur sprachgestützten Steuerung mehrerer Messgeräte in einem Messsystem zu schaffen, das den Sprachumfang jedes im Messsystem integrierten Messgeräts beherrscht und bei Wechsel oder Neueinführung eines Messgeräts keine aufwendigen Aktualisierungen der zur Spracherkennung notwendigen Wissensbasis erforderlich macht.

Die Erfindungsaufgabe wird durch ein System zur sprachgestützten Steuerung von mindestens einem an einem gemeinsamen Bus gekoppelten Messgerät mit den Merkmalen des Patentanspruchs 1 gelöst. Vorteilhafte technische Erweiterungen der Erfindung sind in den abhängigen Patentansprüchen aufgeführt.

Das System zur sprachgestützten Steuerung von mindestens einem, bevorzugt mehreren, an einen Bus gekoppelten Messgerät(en) besteht aus einem Mikrofon zur elektroakustischen Wandlung des vom Benutzer gesprochenen Steuerbefehls in ein korrespondierendes erstes elektrisches Signal, das von einer Signalverarbeitungs-Einheit umgeformt und digital verarbeitet wird und aus dem umgeformten und digital verarbeiteten ersten elektrischen Signal die für eine Spracherkennung relevanten Signalanteile extrahiert. In einer Spracherkennungs-Einheit erfolgt die Ermittlung des zu den extrahierten Signalanteilen korrespondierenden Sprachbefehls, das einer Steuer-Einheit zur Ansteuerung des jeweiligen Messgeräts zugeführt wird. Das System enthält zur sprachgestützten Steuerung von mindestens einem Gerät einen an den Bus gekoppelten Bus-Controller mit einer Datenbasis mit den Steuerbefehlen und den zugehörigen, zur die Spracherkennung erforderlichen Spracherkennungsinformationen, insbesondere Referenzvektoren, aller zum jeweiligen Zeitpunkt am Bus gekoppelten Messgeräte.

Da der Bus-Controller zu jedem Zeitpunkt des Busbetriebs die am Bus gekoppelten Messgeräte identifizieren kann und somit zu jedem Zeitpunkt einzig die für die Steuerung der am Bus gekoppelten Messgeräte notwendigen Steuerbefehle und Spracherkennungsinformationen, insbesondere Referenzvektoren, in der Datenbasis anstelle der Steuerbefehle aller am Bus möglicherweise ankoppelbaren Messgeräte vorhalten muss, reduziert sich der Speicherbedarf an Steuerbefehlen und Referenzvektoren in der Datenbasis auf ein vernünftiges und realisierbare Mass. Außerdem ist bei Wechsel bzw. Neueinführung eines Messgeräts am Bus auch kein Austausch der Datenbasis mit einer neu programmierten Datenbasis erforderlich, da die Aktualisierung der Datenbasis im Bus-Controller durch Laden der Steuerbefehle und der zugehörigen Spracherkennungsinformationen, insbesondere Referenzvektoren, einzig derjenigen Messgeräte, die am Bus zum jeweiligen Zeitpunkt gekoppelt sind, von einem Massenspeichermedium erfolgt.

Beim Bus, an dem die einzelnen Messgeräte gekoppelt sind, handelt es sich bevorzugt um einen General-Purpose-Interface-Bus (GPIB). Die Steuerbefehle der einzelnen Messgeräte gehorchen folglich dem General-Purpose-Interface-Bus-Standard. Es kommen aber auch andere Bussysteme, insbesondere ein IEC-Bus oder ein LAN-Bus in Betracht.

Die Datenbasis mit den Steuerbefehlen und zugehörigen Spracherkennungsinformationen, insbesondere Referenzvektoren aller aktuell am Bus angekoppelten Messgeräte dient einerseits als Wissensbasis für die Spracherkennungs-Einheit, die die aus dem elektrischen Signal des gesprochenen Steuerbefehls generierten Merkmalsvektoren mit Spracherkennungsinformationen, insbesondere den Referenzvektoren, vergleicht, und andererseits als Wissensbasis für einen in der Steuer-Einheit jedes Messgeräts integrierten Parsers, der den von der Spracherkennungs-Einheit korrekt erkannten z.B. GPIBkonformen Steuerbefehl interpretiert, auf korrekte Verwendung überprüft und in korrespondierende Steueranweisungen an eine in der Steuer-Einheit des jeweiligen Messgeräts integrierte Ablaufsteuer-Einheit umsetzt.

Zur Kontrolle einer korrekten Spracherkennung für den Benutzer weist das System zur sprachgestützten Steuerung von mindestens einem an einen Bus gekoppelten Messgerät vorzugsweise zusätzlich eine Spracherzeugungs-Einheit zur Umsetzung eines von der Spracherkennungs-Einheit korrekt erkannten Steuerbefehls oder einer Fehlermeldung im Fall eines von der Spracherkennungs-Einheit nicht erkannten Steuerbefehls
in ein korrespondierendes zweites elektrisches Signals und einen Lautsprecher zur elektroakustischen Wandlung des zweiten elektrischen Signals in den vom Benutzer hörbaren Steuerbefehl oder in die vom Benutzer hörbare Fehlermeldung auf.

Analog setzt die Spracherzeugungs-Einheit eine vom jeweiligen Parser erzeugte Fehlermeldung im Fall von fehlerhaften oder nicht vorhandenen, zum jeweiligen Steuerbefehl gehörigen Steuerbefehlsparametern in ein korrespondierendes zweites elektrisches Signal um.

Optional kann die Spracherzeugungs-Einheit auch Informationen über Betriebszustände, Messwerte oder Aus- bzw. Bewertungen von Messwerten, beispielsweise die Meldung "Messergebnis ist außerhalb des eingestellten Messbereichs", aus jedem am Bus gekoppelten Messgerät in ein korrespondierendes zweites elektrisches Signal umwandeln.

Das erfindungsgemäße System zur sprachgestützten Steuerung von mindestens einem an einem gemeinsamen Bus gekoppelten Messgerät wird im Folgenden anhand der Zeichnung im Detail erläutert. Die Figuren der Zeichnung zeigen:
- Fig. 1: ein Blockdiagramm eines Ausführungsbeispiels des erfindungsgemäßen Systems zur sprachgestützten Steuerung von mindestens einem an einem gemeinsamen Bus gekoppelten Messgerät und
- Fig.2: ein Systemschaltbild des Ausführungsbeispiels.

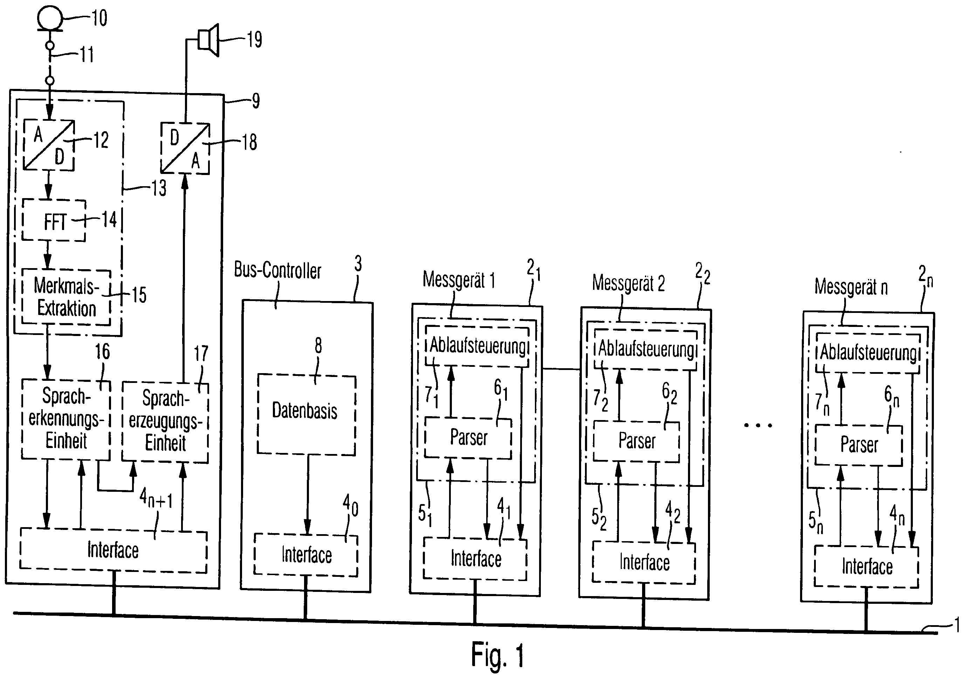

Das System zur sprachgestützten Steuerung von mindestens einem an einem gemeinsamen Bus gekoppelten Messgerät in Fig. 1 besteht aus einem Bussystem für messtechnische Anwendungen, bevorzugt einem General-Purpose-Interface-Bus (GPIB), mit dem eigentlichen Bus 1, einer Vielzahl von an den Bus 1 gekoppelten Messgeräten 2₁, 2₂, ..., 2ₙ, einem mit dem Bus 1 verbundenen Bus-Controller 3 und einer mit dem Bus 1 gekoppelten Sprachsignalverarbeitungs-Einheit 9. Im Folgenden werden nur die für die Beschreibung der Erfindung wesentlichen Funktionseinheiten der jeweiligen Messgeräte 2₁, 2₂, ..., 2ₙ und des Bus-Controllers 3 beschrieben.

Die einzelnen Messgeräte 2₁, 2₂, ..., 2ₙ weisen jeweils ein Bus-Interface 4₁, 4₂, ..., 4ₙ zur kommunikationstechnischen Kopplung des jeweiligen Messgeräts 2₁, 2₂, ..., 2ₙ an den Bus 1 und eine Steuer-Einheit 5₁, 5₂, ..., 5ₙ zur Steuerung und Überwachung der einzelnen Messprozesse im Messgerät. Jede Steuereinheit 5₁, 5₂, ..., 5ₙ besteht wiederum jeweils aus einem Parser 6₁, 6₂, ..., 6ₙ, der entweder die von der Spracherkennung identifizierten Steuerbefehle, bevorzugt Steuerbefehle nach dem GPIB-Standard, oder die von der Bedienoberfläche des jeweiligen Messgeräts 2₁, 2₂, ..., 2ₙ erfassten und in einer ihr zugeordneten Logik-Einheit in den GPIB-Standard gewandelten Steuerbefehle empfängt, interpretiert, auf Korrektheit überprüft und in einzelne Steueranweisungen übersetzt, und einer nachgeschalteten Ablaufsteuer-Einheit 7₁, 7₂, ..., 7ₙ, die über die vom jeweiligen Parser 6₁, 6₂, ..., 6ₙ erzeugten Steueranweisungen die einzelnen Komponenten bzw. Funktionseinheiten des jeweiligen Messgeräts 2₁, 2₂, ..., 2ₙ ansteuert.

Der einzelne Parser 6₁, 6₂, ..., 6ₙ erzeugt nicht nur Steueranweisungen für die jeweilige Ablaufsteuer-Einheit 7₁, 7₂, ..., 7ₙ des Messgeräts 2₁, 2₂, ..., 2ₙ sondern auch Fehlermeldungen, falls bei der Überprüfung der einzelnen Steuerbefehle zugehörige Steuerbefehls-Parameter fehlen oder fehlerhaft sind (beispielsweise falls ein vom Nutzer gewünschter und in einem Steuerbefehlsparameter definierter Messbereich vom jeweiligen Messgerät nicht realisiert werden kann). Diese Fehlermeldungen werden über das jeweilige Bus-Interface 4₁, 4₂, ..., 4ₙ und dem Bus 1 einer noch weiter unten beschriebenen Spracherzeugungs-Einheit zur Sprachausgabe an den Benutzer zur Verfügung gestellt.

Auch die jeweilige Ablaufsteuer-Einheit 7₁, 7₂, ..., 7ₙ stellt auf Anweisung des Benutzers oder im Rahmen interner Prozesse Informationen zu Betriebszuständen des Messgeräts 2₁, 2₂, ..., 2ₙ -beispielsweise unzureichende Stromversorgung des Messgeräts -, vom Messgerät 2₁, 2₂, ..., 2ₙ ermittelte Messwerte oder Be- und Auswertungen der gemessenen Werte - beispielsweise Messwert ist außerhalb des zulässigen und vereinbarten Messbereichs - über das jeweilige Bus-Interface 4₁, 4₂, ..., 4ₙ und dem Bus 1 der Spracherzeugungs-Einheit zur Sprachausgabe an den Benutzer zur Verfügung.

Ein ebenfalls an den Bus 1 angeschlossener Bus-Controller 3, der ebenfalls ein Bus-Interface 4₀ besitzt, weist zusätzlich eine Datenbasis 8 auf, in der sich die Steuerbefehle, insbesondere die Steuerbefehle nach dem GPIB-Standard, und die weiter unten noch beschriebenen, zu den einzelnen Steuerbefehlen gehörigen Referenzvektoren eines akustischen bzw. linguistischen Referenzmodells aller zum jeweiligen Zeitpunkt am Bus 1 angeschlossenen Messgeräte 2₁, 2₂, ..., 2ₙ befinden. Die ständige Aktualisierung der Datenbasis 8 mit den aktuell relevanten Steuerbefehlen erfolgt durch zyklische Abfrage der am Bus 1 angeschlossenen Messgeräte 2₁, 2₂, ..., 2ₙ im Rahmen eines standardmäßig vom Bus-Controllers durchzuführenden Prozesses und dem Löschen nicht mehr relevanter Steuerbefehle und zugehöriger Referenzvektoren von am Bus 1 nicht mehr angekoppelten Messgeräten 2₁, 2₂, ..., 2ₙ bzw. des Ladens neuer Steuerbefehle und zugehöriger Referenzvektoren für neu an den Bus 1 gekoppelte Messgeräte 2₁, 2₂, ..., 2ₙ über eine separate, hier nicht weiter spezifizierte Schnittstelle von einem externen, hier nicht weiter spezifizierten Massenspeichermedium.

Die zum jeweiligen Messgerät 2₁, 2₂, ..., 2ₙ gehörigen Steuerbefehle werden über das Bus-Interface 4₀ und dem Bus 1 den einzelnen Parsern 6₁, 6₂, ..., 6ₙ zur Interpretation und zur Überprüfung der einzelnen Steuerbefehle zugeführt. Die zugehörigen Referenzvektoren eines akustischen bzw. linguistischen Referenzmodells werden der noch weiter unten zu beschreibenden Spracherkennungs-Einheit zur Erkennung der vom Benutzer gesprochenen Steuerbefehle zugeführt.

Die Sprachsignalverarbeitungs-Einheit 9 ist über eine Verbindung 11, die entweder eine drahtgebundene Verbindung oder eine drahtlose Verbindung, beispielsweise nach dem Bluetooth-Standard, darstellt, mit einem Mikrofon 10 verbunden, das einen vom Benutzer ausgesprochenen Steuerbefehl in ein korrespondierendes erstes elektrisches Signal wandelt. Dieses erste elektrische Signal wird in einem Analog-Digital-Wandler 12 einer Signalverarbeitungs-Einheit 13 in ein jeweiliges digitales Signal gewandelt, aus dessen diskretisierten Abtastwerten in einem zur Signalverarbeitungs-Einheit 13 gehörigen Fast-Fourier-Transformator 14 zugehörige diskretisierte Spektralwerte gewonnen werden.

In einem ebenfalls zur Signalverarbeitungs-Einheit 13 gehörigen Merkmals-Extraktor 15 werden aus dem diskretisierten Spektralverlauf die für die nachfolgende Spracherkennung relevanten Signalanteile herausgefiltert und in einer Folge von Merkmalsvektoren abgelegt. Diese Merkmalsvektoren sind gegenüber dem diskretisierten Spektrum um Dimensionen in der Datenmenge reduziert und enthalten einzig die für die Unterscheidung von einzelnen Sprachlauten wichtigen Informationen, wobei sprecherabhängige Informationsanteile bereits herausgefiltert sind.

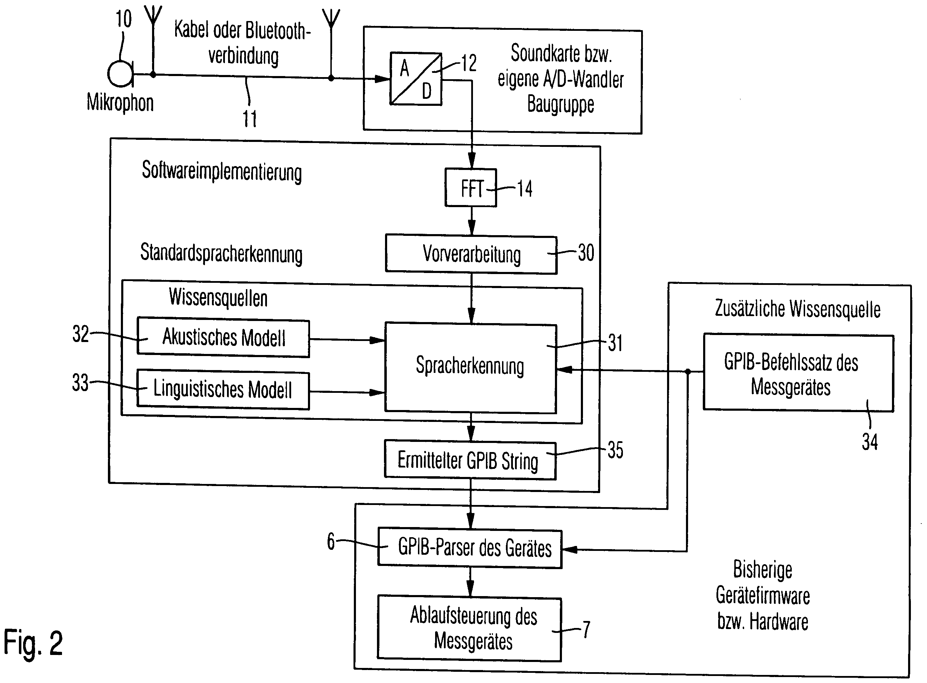

Die im Merkmals-Extraktor 15 generierten Merkmalsvektoren werden in einer nachfolgenden Spracherkennungs-Einheit 16 nach üblichen Spracherkennungs-Verfahren mit Referenz-Modellen auf bestmögliche Übereinstimmung verglichen. Als Referenzmodelle dienen akustische Modelle, die Referenzvektoren der in einzelnen gesprochenen Worten jeweils sequentiell auftretenden Sprachlaute enthalten, und linguistische Modelle, die Referenzvektoren über eine Sequenz von Worten im Hinblick einer kontextsensitiven Erkennung enthalten. Dies wird anhand von Fig. 2 deutlich. Für akustische Referenzmodelle haben sich die sogenannten Hidden-Markov-Modelle etabliert, während bei linguistischen Referenz-Modellen die Trigrammstatistik bevorzugt Verwendung findet. Die Spracherkennungs-Verfahren ermitteln auf der Basis des aus der Kanalkodierung bekannten Viterbi-Algorithmuses diejenige Sprachlaut-Folge bzw. diejenigen Wortfolge aus den Referenz-Modellen, die mit der höchsten Wahrscheinlichkeit mit dem jeweils ermittelten Merkmalsvektor übereinstimmt.

Als Referenzvektoren eines Referenzmodells für die in der Sprachsignalverarbeitungs-Einheit 9 befindlichen Spracherkennungs-Einheit 16 dienen einerseits die in der Datenbasis 8 des Bus-Controllers 3 abgelegten Referenzvektoren der Steuerbefehle, die zu allen am Bus 3 zum jeweiligen Zeitpunkt gekoppelten Messgeräte 2₁, 2₂,..., 2ₙ gehören, und die Referenzvektoren der zu den einzelnen Steuerbefehlen gehörigen Steuerbefehlsparameter, die typischerweise Zahlenwerte und Standardbegriffe beinhalten und somit in einer in der Spracherkennungs-Einheit 16 integrierten und in Fig. 1 nicht dargestellten Datenbasis mit einem den Standardsprachumfang enthaltenden Referenzmodell abgelegt sind. Die zu den Steuerbefehlen gehörigen Referenzvektoren werden bei Bedarf von der im Bus-Controller 3 befindlichen Datenbasis 8 über den Bus 1 und ein auf der Sprachsignalverarbeitungs-Einheit 9 befindliches Bus-Interface 4ₙ₊₁ in die in der Spracherkennungs-Einheit 16 befindliche Datenbasis geladen. Die Ermittlung der zu den einzelnen Steuerbefehlen gehörigen Referenzvektoren erfolgt offline mit einem hier nicht näher erklärten und spezifizierten Spracherkennungssystem und kann aufgrund des begrenzten Sprachumfangs der Steuerbefehle sprecherunabhängig erfolgen. Die ermittelten Referenzvektoren werden zusammen mit den zugehörigen Steuerbefehlen, wie oben schon erwähnt, auf einem externen, in Fig. 1 nicht dargestellten Massenspeichermedium bis zur Aktualisierung der Datenbasis 8 des Bus-Controllers 3 zwischengespeichert.

Der von der Spracherkennungs-Einheit 16 korrekt erkannte Steuerbefehl bzw. eine von der Spracherkennungs-Einheit 16 erzeugte Fehlermeldung im Fall eines nicht erkannten Steuerbefehls wird einer ebenfalls auf der Sprachsignalverarbeitungs-Einheit 9 befindlichen Spracherzeugungs-Einheit 17 zugeführt, die ein dem erkannten Steuerbefehl bzw. der erzeugten Fehlermeldung korrespondierendes zweites elektrisches Signal erzeugt, das als digitales Signal einem Digital-Analog-Wandler 18 zur Wandlung in ein entsprechendes analoges Signal zugeführt wird. Das analog gewandelte zweite elektrische Signal wird in einem Lautsprecher 19 in den zum zweiten elektrischen Signal korrespondierenden, vom Benutzer hörbaren Steuerbefehl bzw. in die zum zweiten elektrischen Signal korrespondierende, vom Benutzer hörbare Fehlermeldung elektroakustisch gewandelt.

In äquivalenter Weise werden die vom Parser 6₁, 6₂, ..., 6ₙ des jeweiligen Messgeräts 2₁, 2₂, ..., 2ₙ erzeugten und oben bereits beschriebene Fehlermeldungen im Fall fehlender oder fehlerhafter Steuerbefehlsparameter und die von der Ablaufsteuer-Einheit 7₁, 7₂, ..., 7ₙ des jeweiligen Messgeräts 2₁, 2₂, ..., 2ₙ erzeugten und oben bereits beschriebenen Informationen über Betriebszustände des jeweiligen Messgeräts 2₁, 2₂, ..., 2ₙ oder über vom jeweiligen Messgerät 2₁, 2₂, ..., 2ₙ erfasste Messwerte oder über Be- bzw. Auswertungen von erfassten Messwerten über den Bus 1, das Bus-Interface 4ₙ₊₁, die Spracherzeugungs-Einheit 17 und den Digital-Analog-Wandler 18 dem Lautsprecher 19 zur Sprachausgabe zugeführt.

Die Sprachsignalverarbeitungs-Einheit 9 kann in einer weiteren Ausführungsform als separate Baugruppe ohne Busanschluss über nicht näher spezifizierte elektrische Verbindungen mit der Datenbasis 8 auf dem Bus-Controller bzw. mit den Parsern 6₁, 6₂, ..., 6ₙ und den Ablausteuerungen 7_{1,} 7_{2,} ..., 7ₙ der einzelnen Messgeräte 2₁, 2₂, ..., 2ₙ kommunizieren. Das für den Busanschluss erforderliche Bus-Interface 4ₙ₊₁ entfällt in diesem Fall.

Auch kann die Sprachsignalverarbeitungs-Einheit 9 in einer weiteren Ausführungsform auf dem Bus-Controller 3 oder in einem der Messgeräte 2₁, 2₂, ..., 2ₙ integriert sein.

Fig. 2 zeigt ein Systemschaltbild des in Fig. 1 dargestellten Ausführungsbeispiels, wobei einzelne Aspekte des Ausführungsbeispiels dort noch etwas genauer dargestellt sind und nachfolgend beschrieben werden.

Wie bereits anhand von Fig. 1 beschrieben, wird ein Sprachsignal über ein Mikrophon 10 und eine Verbindung 11, welche beispielsweise eine Kabel- oder Bluetooth-Verbindung sein kann, einem Rechner zugeführt. Der Analog/Digital-Wandler 12 kann entweder auf einer speziellen Soundkarte des Rechners vorhanden sein oder es kann eine spezielle Analog/Digital-Wandlerbaugruppe vorgesehen sein. In einer Einheit 14 erfolgt dann die Fourier-Transformation. Anschließend erfolgt in einem Block 30 eine Vorverarbeitung, bevor in der Spracherkennungs-Einheit 31 die eigentliche Spracherkennung erfolgt. Die Spracherkennungs-Einheit 31 kann dabei sowohl auf eine erste Datenbank 32, welche das akustische Modell als Wissensquelle enthält, als auch auf eine zweite Datenbank 33, welche das linguistische Modell als Wissensquelle enthält, zugreifen. Außerdem steht als eine zusätzliche Wissensquelle der Befehlssatz des Busses 1 der Messgeräte in einer Datenbank 34 zu Verfügung, die entweder in den Messgeräten oder in dem Bus-Controller angeordnet sein kann. Im dargestellten Beispiel handelt es sich um den GPIB-Befehlssatz des GPIB-Busses.

Die Spracherkennungseinheit 31 ermittelt in einem Block 35 den GPIB-String d.h. die Zeichenfolge des von dem Benutzer ausgewählten speziellen Messgeräte-Befehls. Wie bereits anhand von Fig. 1 beschrieben, verfügt das Messgerät über einen entsprechenden Parser, d.h. im Ausführungsbeispiel über einen GPIB-Parser, welcher den Befehl interpretiert und einer Ablaufsteuerung 7 des Messgeräts zuführt.

Bei der Spracherkennungsinformation muss es sich nicht zwingend um die Referenzvektoren handeln. Es kann hier auch eine Überprüfung dahingehend erfolgen, ob ein von der Spracherkennungs-Einheit 31 vermeintlich erkannter Befehl tatsächlich ein zulässiger Befehl der speziellen Messgerätekonfiguration ist. Wird durch die Spracherkennungs-Einheit 31 beispielsweise vermeintlich erkannt, das der Benutzer das Wort "Volt" verwendet hat, befindet sich aber in der speziellen
Messgerätekonfiguration gar kein Messgerät, welches diese Einheit verarbeiten kann, so wird diese Eingabe als ungültige Eingabe verworfen. Entweder erfolgt dann eine akustische oder optische Fehlermeldung an den Benutzer oder die Spracherkennungs-Einheit 31 entscheidet sich dann für einen sprachlich und klanglich verwandten Befehl bzw. eine sprachlich und klanglich verwandte Einheit (beispielsweise "Watt"), welche einen zulässigen Befehl oder eine zulässige Einheit innerhalb des speziell konfigurierten Messgerätesystems darstellt.

Die Erfindung ist nicht auf die beschriebenen Ausführungsformen und technischen Details beschränkt. Von der Erfindung sind insbesondere neben dem GPIB-Bussystem auch andere in der Messtechnik heute und zukünftig verwendete Bussysteme abgedeckt. Der Schutzumfang der vorliegenden Erfindung wird durch die angefügten Ansprüche definiert.

## Patentansprüche

1. System zur sprachgestützten Steuerung von mindestens einem an einem gemeinsamen Bus (1) gekoppelten Messgerät (2₁, 2₂, ..., 2ₙ) mit
einem Mikrofon (19) zur elektroakustischen Wandlung eines vom Benutzer gesprochenen Steuerbefehls in ein korrespondierendes erstes elektrisches Signal,
einer Signalverarbeitungs-Einheit (13) zur Signalverarbeitung des ersten Signals und zur Extraktion von für eine Spracherkennung relevanten Signalinformationen aus dem signalverarbeiteten ersten Signal,
einer Spracherkennungs-Einheit (16) zur Erkennung des Steuerbefehls aus den extrahierten Signalinformationen und einer in jedem Messgerät (2₁, 2₂, ..., 2ₙ) jeweils integrierten Steuer-Einheit (5₁, 5₂, ..., 5ₙ) zur Ansteuerung des jeweiligen Messgeräts (2₁, 2₂, ..., 2ₙ) im Sinne des erkannten Steuerbefehls,
wobei am Bus (1) ein Bus-Controller (3) gekoppelt ist, der eine Datenbasis (8) mit ständig aktualisierten Steuerbefehlen und zugehörigen für die Spracherkennung erforderlichen Spracherkennungsinformationen einzig der zum jeweiligen Zeitpunkt am Bus (3) gekoppelten Messgeräte (2₁, 2₂, ..., 2ₙ) enthält,
wobei
i) eine zyklische Abfrage der am Bus (1) angeschlossenen Messgeräte (2₁, 2₂, ..., 2ₙ) erfolgt,
ii) das Löschen nicht mehr relevanter Steuerbefehle und zugehöriger Referenzvektoren von am Bus (1) nicht mehr angekoppelten Messgeräten (2₁, 2₂, ..., 2ₙ) erfolgt und
iii) das Laden neuer Steuerbefehle und zugehöriger Referenzvektoren für neu an den Bus (1) gekoppelte Messgeräte (2₁, 2₂, ..., 2ₙ) erfolgt.

2. System nach Anspruch 1,
**dadurch gekennzeichnet,**
**dass** der Bus (1) ein General-Purpose-Interface-Bus ist und die im Bus-Controller (3) befindliche Datenbasis (8) Steuerbefehle nach dem General-Purpose-Interface-Bus-Standard aufweist.

3. System nach Anspruch 1 oder 2,
**dadurch gekennzeichnet,**
**dass** die im Bus-Controller (3) befindliche Datenbasis (8) als Wissensbasis für die Spracherkennungs-Einheit (16) dient.

4. System nach einem der Ansprüche 1 bis 3,
**dadurch gekennzeichnet,**
**dass** die Steuer-Einheit (5₁, 5₂, ..., 5ₙ) des jeweiligen Messgeräts (2₁, 2₂, ..., 2ₙ) aus einem den jeweiligen Steuerbefehl interpretierenden Parser (6₁, 6₂, ..., 6ₙ) und einer nachgeschalteten, den interpretierten Steuerbefehl ausführenden Ablaufsteuer-Einheit (7₁, 7₂, ..., 7ₙ) besteht.

5. System nach Anspruch 4,
**dadurch gekennzeichnet,**
**dass** die Datenbasis (8) als Wissensbasis für den in der Steuer-Einheit (5₁, 5₂, ..., 5ₙ) des jeweiligen Messgeräts (2₁, 2₂, ..., 2ₙ) befindlichen Parser (6₁, 6₂, ..., 6ₙ) dient.

6. System nach einem der Ansprüche 1 bis 5,
**dadurch gekennzeichnet,**
**dass** der Spracherkennungs-Einheit (16) eine Spracherzeugungs-Einheit (17) zur Generierung eines zweiten Signals, das einem erkannten Sprachbefehl oder einer Fehlermeldung im Fall eines nicht erkannten Steuerbefehls entspricht, und ein Lautsprecher (19) zur elektroakustischen Wandlung des erzeugten zweiten Signals in einen korrespondierenden, vom Benutzer hörbaren Steuerbefehl nachgeschaltet ist.

7. System nach Anspruch 6, **dadurch gekennzeichnet,**
**dass** die Spracherzeugungs-Einheit (17) mit einem in der Steuer-Einheit (5₁, 5₂, ..., 5ₙ) des jeweiligen Messgeräts (2₁, 2₂, ..., 2ₙ) befindlichen Parser (6₁, 6₂, ..., 6ₙ) zur Erzeugung des zweiten Signals verbunden ist, das einer Fehlermeldung im Fall von fehlenden oder fehlerhaften, zum Steuerbefehl jeweils gehörigen Steuerbefehlsparametern entspricht.

8. System nach Anspruch 6 oder 7,
**dadurch gekennzeichnet,**
**dass** die Spracherzeugungs-Einheit (17) mit der Ablaufsteuer-Einheit (7₁, 7₂, ..., 7ₙ) des jeweiligen Messgeräts (2₁, 2₂, ..., 2ₙ) zur Erzeugung eines zweiten elektrischen Signals verbunden ist, das einer Information über einen Betriebszustand des Messgeräts (2₁, 2₂, ..., 2ₙ) und/oder über einen erfassten Messwert und/oder über eine Be- oder Auswertung des erfassten Messwerts im jeweiligen Messgerät (2₁, 2₂, ..., 2ₙ) entspricht.

9. System nach einem der Ansprüche 1 bis 8,
**dadurch gekennzeichnet,**
**dass** die Spracherkennungsinformationen Referenzvektoren sind, die bei einer Sprach-Referenzeingabe erzeugt wurden.

## Claims

1. System for voice-supported control of at least one measuring instrument (2₁, 2₂, ..., 2ₙ) coupled to a common bus (1) with
a microphone (19) for electro-acoustic conversion of a control command spoken by the user into a corresponding first electrical signal,
a signal processing unit (13) for signal processing of the first signal and for extraction of signal information relevant for speech recognition from the signal processed first signal,
a speech recognition unit (16) for recognition of the control command from the extracted signal information and a control unit (5₁, 5₂, ..., 5ₙ) integrated in each measuring instrument (2₁, 2₂, ..., 2ₙ) for actuating the particular measuring instrument (2₁, 2₂, ..., 2ₙ) in response to the recognised control command,
wherein coupled to the bus (1) there is a bus controller (3) which contains a data base (8) with constantly updated control commands and associated speech recognition information required for speech recognition specifically for the measuring instruments (2₁, 2₂, ..., 2ₙ) coupled to the bus (1) at that particular point in time,
wherein
i) the measuring instruments (2₁, 2₂, ..., 2ₙ) connected to the bus (1) are interrogated cyclically,
ii) control commands and associated reference vectors which are no longer relevant of measuring instruments (2₁, 2₂, ..., 2ₙ) which are no longer coupled to the bus (1) are deleted and
iii) new control commands and associated reference vectors for measuring instruments (2₁, 2₂, ..., 2ₙ) which are newly coupled to the bus (1) are loaded.

2. System according to claim 1,
**characterised in that**
the bus (1) is a general purpose interface bus and the data base (8) located in the bus controller (3) has control commands in accordance with the general purpose interface bus standard.

3. System according to claim 1 or 2,
**characterised in that**
the data base (8) located in the bus controller (3) serves as knowledge base for the speech recognition unit (16).

4. System according to one of claims 1 to 3, **characterised in that**
the control unit (5₁, 5₂, ..., 5ₙ) of the particular measuring instrument (2₁, 2₂, ..., 2ₙ) consists of a parser (6₁, 6₂, ..., 6ₙ) which interprets the particular control command and of a following operating sequence control unit (7₁, 7₂, ..., 7ₙ) which executes the interpreted control command.

5. System according to claim 4,
**characterised in that**
the data base (8) serves as knowledge base for the parser (6₁, 6₂, ..., 6ₙ) located in the control unit (5₁, 5₂, ..., 5ₙ) of the particular measuring instrument (2₁, 2₂, ... , 2ₙ).

6. System according to one of claims 1 to 5, **characterised in that**
the speech recognition unit (16) is followed by a speech production unit (17) for generation of a second signal which corresponds to a recognised voice command or an error message in the case of a control command which is not recognised, and a loudspeaker (19) for electro-acoustic conversion of the generated second signal into a corresponding control command which is audible to the user.

7. System according to claim 6,
**characterised in that**
the speech production unit (17) is connected with a parser (6₁, 6₂, ..., 6ₙ) located in the control unit (5₁, 5₂, ..., 5ₙ) of the particular measuring instrument (2₁, 2₂, ..., 2ₙ) for production of the second signal which corresponds to an error message in the case of missing or defective control command parameters associated with the particular control command.

8. System according to claim 6 or 7,
**characterised in that**
the speech production unit (17) is connected with the operating sequence control unit (7₁, 7₂, ..., 7ₙ) of the particular measuring instrument (2₁, 2₂, ..., 2ₙ) for production of a second electrical signal which corresponds to information about an operating state of the measuring instrument (2₁, 2₂, ..., 2ₙ) and/or about a detected measurement value and/or about evaluation or implementation of the detected measurement value in the particular measuring instrument (2₁, 2₂, ..., 2ₙ).

9. System according to one of claims 1 to 8, **characterised in that**
the speech recognition information is reference vectors which were produced during speech reference inputting.

## Revendications

1. Système de réglage vocal d'au moins un appareil de mesure (2₁, 2₂, ..., 2ₙ) couplé à un bus commun (1) avec un microphone (19) pour la transformation électroacoustique d'un ordre donné par l'utilisateur en un premier signal électrique correspondant,
une unité de traitement du signal (13) pour le traitement du premier signal et pour l'extraction d'informations de signal pertinentes pour une reconnaissance vocale et provenant du premier signal traité,
une unité de reconnaissance vocale (16) pour la reconnaissance de l'ordre à partir des informations de signal extraites et une unité de réglage (5₁, 5₂, ..., 5ₙ) respectivement intégrée à chaque appareil de mesure (2₁, 2₂, ..., 2ₙ) pour commander l'appareil de mesure (2₁, 2₂, ..., 2ₙ) respectif selon l'ordre reconnu,
dans lequel un contrôleur de bus (3) est couplé au bus (1) et contient une base de données (8) avec des ordres en permanence actualisés et les informations de reconnaissance vocale correspondantes nécessaires à la reconnaissance vocale,
propres aux appareils de mesure (2₁, 2₂, ..., 2ₙ) couplés à chaque instant au bus (3),
dans lequel
i) une interrogation cyclique des appareils de mesure (2₁, 2₂, ..., 2ₙ) raccordés au bus (1) est effectuée,
ii) la suppression des ordres désormais non pertinents et des vecteurs de référence associés des appareils de mesure (2₁, 2₂, ..., 2ₙ) qui ne sont plus couplés au bus (1) est effectuée et
iii) le chargement de nouveaux ordres et des vecteurs de référence associés pour les appareils de mesure (2₁, 2₂, ..., 2ₙ) nouvellement couplés au bus (1) est effectué.

2. Système selon la revendication 1, **caractérisé en ce que** le bus (1) est un bus GPI (General Purpose Interface) et la base de données (8) se trouvant dans le contrôleur de bus (3) présente des ordres conformes à la norme de bus GPI (General Purpose Interface).

3. Système selon la revendication 1 ou 2, **caractérisé en ce que** la base de données (8) se trouvant dans le contrôleur de bus (3) sert de base de connaissances pour l'unité de reconnaissance vocale (16).

4. Système selon l'une quelconque des revendications 1 à 3, **caractérisé en ce que** l'unité de réglage (5₁, 5₂, ..., 5ₙ) de l'appareil de mesure (2₁, 2₂, ..., 2ₙ) respectif est composée d'un analyseur (6₁, 6₂, ..., 6ₙ) interprétant l'ordre respectif et d'une unité de réglage séquentiel (7₁, 7₂, ..., 7ₙ), placée en aval, exécutant l'ordre interprété.

5. Système selon la revendication 4, **caractérisé en ce que** la base de données (8) sert de base de connaissances pour l'analyseur (6₁, 6₂, ..., 6ₙ) situé dans l'unité de réglage (5₁, 5₂, ..., 5ₙ) de l'appareil de mesure (2₁, 2₂, ..., 2ₙ) respectif.

6. Système selon l'une quelconque des revendications 1 à 5, **caractérisé en ce qu'**à l'unité de reconnaissance vocale (16) correspond une unité de reconnaissance vocale (17) pour générer un deuxième signal correspondant à un ordre reconnu ou à un message d'erreur en cas d'ordre non reconnu et **en ce qu'**un haut-parleur (19) est placé en aval pour la transformation électroacoustique du deuxième signal produit dans un ordre correspondant audible pour l'utilisateur.

7. Système selon la revendication 6, **caractérisé en ce que** l'unité de reconnaissance vocale (17) est raccordée à un l'analyseur (6₁, 6₂, ..., 6ₙ) situé dans l'unité de réglage (5₁, 5₂, ..., 5ₙ) de l'appareil de mesure (2₁, 2₂, ..., 2ₙ) respectif pour produire le deuxième signal correspondant à un message d'erreur en cas de paramètres d'ordre manquants ou défectueux respectivement associés à l'ordre.

8. Système selon la revendication 6 ou 7, **caractérisé en ce que** l'unité de reconnaissance vocale (17) est raccordée à l'unité de réglage séquentiel (7₁, 7₂, ..., 7ₙ) de l'appareil de mesure (2₁, 2₂, ..., 2ₙ) respectif pour produire un deuxième signal électrique correspondant à une information concernant un état de fonctionnement de l'appareil de mesure (2₁, 2₂, ..., 2ₙ) et/ou une valeur mesurée collectée et/ou une estimation ou une évaluation de la valeur mesurée collectée dans l'appareil de mesure (2₁, 2₂, ..., 2ₙ) respectif.

9. Système selon l'une quelconque des revendications 1 à 8, **caractérisé en ce que** les informations de reconnaissance vocale sont des vecteurs de référence produits lors d'une saisie de la référence vocale.
